# EUROPÄISCHE PATENTSCHRIFT

(11) **EP 3 122 682 B1**
(45) Veröffentlichungstag und Bekanntmachung des Hinweises auf die Patenterteilung: **10.08.2022**
(21) Anmeldenummer: 15708155.5
(22) Anmeldetag: 26.02.2015
(51) Int. Cl.: B67C 3/00, B67C 3/20, B07C 5/16, B07C 5/34, B65B 1/46, G01G 19/03, G01G 15/00

(54) **VERFAHREN ZUM KONTROLLIEREN VON EINEM GEFÜLLTEN BEHÄLTER UND KONTROLLSYSTEM FÜR GEFÜLLTE BEHÄLTER**
METHOD FOR MONITORING A FILLED CONTAINER, AND MONITORING SYSTEM FOR FILLED CONTAINERS
PROCÉDÉ ET SYSTÈME DE CONTRÔLE DE RÉCIPIENTS REMPLIS

(30) Priorität: 28.03.2014 DE 102014104375
(43) Veröffentlichungstag der Anmeldung: 01.02.2017
(73) Patentinhaber: KRONES Aktiengesellschaft, 93073 Neutraubling (DE)
(72) Erfinder: AICHINGER, Karl, 93073 Neutraubling (DE); KLINGER, Reinhard, 93073 Neutraubling (DE)
(74) Vertreter: Grünecker Patent- und Rechtsanwälte PartG mbB
(86) Internationale Anmeldenummer: PCT/EP2015/054006
(87) Internationale Veröffentlichungsnummer: WO 2015/144379

(56) Entgegenhaltungen:
- EP-A1- 0 636 574
- EP-A1- 1 156 301
- EP-A1- 1 698 586
- EP-A1- 1 803 682
- EP-A1- 1 955 949
- EP-A1- 2 161 202
- EP-A1- 2 233 428
- EP-A1- 2 371 397
- EP-A1- 2 583 931
- WO-A1-2005/003017
- WO-A1-2010/034388
- DE-A1-102011 086 708

## Beschreibung

Die Erfindung bezieht sich auf ein Kontrollsystem für gefüllte Behälter und ein Verfahren zum Kontrollieren von gefüllten Behältern.

Es ist bekannt, nach dem Abfüllvorgang von Getränken oder anderen Flüssigkeiten in Behälter, den Füllstand jedes einzelnen Behälters zu kontrollieren, um sicherzustellen, dass die Abweichungen vom Soll-Wert der Füllung des Behälters nicht zu groß sind. Typischerweise werden Behälter, bei denen die Abweichung vom Soll-Wert der Füllung zu groß ist, aus dem Produktionsstrom ausgeschieden.

Es ist beispielsweise bekannt, den Füllstand optisch, mittels Hochfrequenz, mittels Röntgen- oder Gammastrahlung oder ähnlichen Verfahren zu messen. Die Messgenauigkeit ist jedoch deutlich verringert, wenn die Flüssigkeit noch schäumt oder aufgrund einer Bewegung des Behälters schwappt.

Zudem kann eine Analyse des Füllstandes typischerweise nur mit einer geringen Genauigkeit von etwa 2 bis 3 mm Höhe erfolgen. Zusätzlich können sich Behälter, z.B. Behälter aus Kunststoff, bei dem Füll- und Transportvorgang ausdehnen, wodurch die Messung noch ungenauer wird und z.B. Korrekturfaktoren notwendig werden (siehe z.B. DE 10 2006 062 536). Außerdem sind optische Verfahren nicht für Behälter geeignet, die im Bereich der oberen Füllgrenze undurchsichtig sind, z.B. weil sie im Halsbereich stanioliert oder etikettiert sind.

Typischerweise müssen Vorrichtungen, die solche Füllstände messen, für jedes Produkt einzeln kalibriert werden, wobei z.B. Schaumbildung des speziellen Produktes in der bestimmten Anlage und/oder Temperatur und/oder Druck und/oder Flaschenfarbe und/oder Produkt berücksichtigt werden müssen. Dies macht die Einrichtung solcher Vorrichtungen sehr teuer, insbesondere wenn mehrere Produkte damit verwendet werden sollen. EP 1 955 949 A1 offenbart ein Verfahren und ein Kontrollsystem gemäß den Oberbegriffen der Ansprüche 1, 4 und 5.

Der Erfindung liegt die Aufgabe zugrunde, eines oder mehrere Probleme des Standes der Technik zu lösen.

Die Erfindung umfasst ein Verfahren zum Kontrollieren von gefüllten Behältern nach Anspruch 1, ein Kontrollsystem für gefüllte Behälter nach Anspruch 4 und ein Kontrollsystem für gefüllte Behälter nach Anspruch 5. Einige Ausführungsbeispiele sind in den abhängigen Ansprüchen beschrieben. Gefüllte Behälter können beispielsweise aus Kunststoff, Glas oder Metall sein, und können mit einer Flüssigkeit, beispielsweise einem Getränk, gefüllt sein. Insbesondere können solche gefüllten Behälter gefüllte Getränkebehälter sein. Die gefüllten Behälter können z.B. gefüllte Getränkeflaschen, z.B. aus Glas oder Kunststoff, z.B. PET, und/oder gefüllte Getränkedosen sein oder umfassen.

Das Verfahren kann ein Verfahren zum Kontrollieren von gefüllten, verschlossenen Behältern sein. Ein Kontrollsystem, insbesondere ein Kontrollsystem nach Anspruch 4 oder 5 oder ein nachfolgend beschriebenes Kontrollsystem, kann zum Kontrollieren von gefüllten, verschlossenen Behältern ausgebildet sein.

Das von der Erfindung umfasste Verfahren zum Kontrollieren von einem gefüllten Behälter, insbesondere einem gefüllten Getränkebehälter, umfasst, dass ein gefüllter Behälter, der auf einem Transporteur befördert wird, mit einem Schlitten aufgenommen wird. Nach dem Aufnehmen wird der Behälter durch den Schlitten gehalten. Das Verfahren umfasst zudem, dass ein Abstand zwischen dem Behälter und dem Transporteur erzeugt wird, so dass in einem Wägebereich das gesamte Gewicht des Behälters von dem Schlitten gehalten wird, und der gehaltenen Behälter mit einer vom Schlitten umfassten Wägezelle in dem Wägebereich gewogen wird. In dem Verfahren wird der Schlitten mit einem Linearmotor angetrieben. Der Linearmotor kann z.B. ausgebildet sein wie ein weiter unten im Zusammenhang mit dem Kontrollsystem beschriebener Linearmotor. Zu einem Zeitpunkt nach dem Wiegen wird der Behälter von dem Schlitten typischerweise wieder losgelassen.

Das Verfahren kann optional umfassen, dass der gehaltene Behälter, nachdem er gewogen wurde, vom Transporter auf eine Ausleiteinheit ausgeleitet wird, wobei der Behälter mit dem Schlitten (d.h. unter Verwendung des Schlittens) ausgeleitet wird, z.B. zu einer Ausleiteinheit geführt wird und auf ihr losgelassen wird. Alternativ kann das Verfahren optional nach dem Wiegen ein Annähern des gehaltenen Behälters an den Transporteur und Loslassen des Behälters auf dem Transporteur umfassen. Der Transporteur kann dabei ausgebildet sein, wie weiter unten in Bezug auf ein Kontrollsystem beschrieben.

Das Verfahren kann zudem umfassen, mehrere Behälter (z.B. nacheinander) zu kontrollieren, wobei optional der Abstand der Schlitten zueinander verändert wird. Beispielsweise kann, z.B. während ein Behälter im Wägebereich transportiert wird (also ein Abstand zwischen Transporteur und Behälter besteht), die Geschwindigkeit des Schlittens geändert werden, z.B. so, dass er näher an den vorherigen Schlitten herangeführt wird oder der Abstand zu diesem vergrößert wird, oder so dass der gehaltene Behälter mit einer anderen Geschwindigkeit abgestellt werden kann, als die, mit der er aufgenommen wurde. So kann der Abstand der von den Schlitten gehaltenen Behälter zueinander verändert werden, z.B. ohne dass durch Reibung zwischen Transporteur und Behälter Reibung und damit Lärm entsteht. In anderen Fällen kann die Geschwindigkeit eines Schlittens und/oder der Abstand von Schlitten zueinander verändert werden, wenn diese keine Behälter halten, z.B. kann ein Schlitten auf die Geschwindigkeit eines aufzunehmenden Behälters beschleunigt werden und/oder nach Abgeben eines Behälters abgebremst werden.

Das Verfahren kann z.B. in einem nachfolgend beschriebenen Kontrollsystem durchgeführt werden. Es kann - unabhängig davon, ob es in einer nachfolgend beschriebenen Vorrichtung durchgeführt wird oder nicht - einen der weiteren Schritte umfassen, die im Folgenden im Zusammenhang mit dem Kontrollsystem beschrieben werden oder eine beliebige Kombination von mehreren oder allen Schritten umfassen, die im Zusammenhang mit einem Kontrollsystem beschrieben werden. Es kann beispielsweise ein Erfassen eines Behälters mit einem Sensor, ein Einstellen der Geschwindigkeit des Schlittens, ein Überprüfen der Leckage durch eine Squeezefunktion, ein Einstellen der Schlitten und/oder des Linearantriebs für eine Behältergröße und/oder andere Schritte umfassen, die im Folgenden im Zusammenhang mit einem Kontrollsystem beschrieben werden. Beispielsweise kann das Verfahren umfassen, dass mehrere gefüllte Behälter, insbesondere gefüllte Getränkebehälter mit mehreren Schlitten kontrolliert werden. Es kann also als ein Verfahren zum Kontrollieren von gefüllten Behältern ausgebildet sein. Dabei kann es beispielsweise den Schritt umfassen, dass die Geschwindigkeit jedes Schlittens (optional unabhängig von der Geschwindigkeit eines anderen Schlittens) angepasst wird.

Ein Kontrollsystem für gefüllte Behälter kann beispielsweise nach einem Abfüller installiert werden, ein Verfahren nach dem Befüllen des Behälters durchgeführt werden. Ein Kontrollsystem kann zwischen einem Abfüller und einer Etikettierstation installiert werden, so dass vor dem Etikettieren eine Kontrolle der gefüllten Behälter erfolgen kann, das Verfahren kann zwischen dem Befüllen des Behälters und dem Etikettieren des Behälters ausgeführt werden.

Das Verfahren und/oder Kontrollsystem ist zum Kontrollieren von Behältern, die auf einem Transporteur befördert werden, ausgebildet. Ein Kontrollsystem kann insbesondere zum Durchführen eines zuvor beschriebenen Verfahrens ausgebildet sein. Ein Kontrollsystem kann den Transporteur umfassen oder so ausgebildet sein, dass es an einen vom Kontrollsystem nicht umfassten Transporteur angebaut oder neben ihm aufgebaut werden kann.

Typischerweise ist der Transporteur einbahnig ausgebildet, so dass die Behälter hintereinander transportiert werden. Der Transporteur kann z.B. als Transportband und/oder eine Transportkette ausgebildet sein oder sie umfassen. Der Transporteur kann einteilig, d.h. ununterbrochen ausgebildet sein. Der Transporteur kann als gerade Laufstrecke (ohne Kurven) für die Behälter ausgebildet sein oder eine gerade Laufstrecke für die Behälter umfassen. Alternativ oder zusätzlich kann der Transporteur eine oder mehr Kurven umfassen und/oder einen Überschub umfassen und/oder unterbrochen sein, wobei optional zwei Teile des Transporteurs mit zwei verschiedenen Geschwindigkeiten betreibbar sein können.

Ein Kontrollsystem umfasst mehrere Schlitten, die auch Mover genannt werden.

Wenn im Folgenden die Eigenschaften von einem Schlitten (dem Schlitten) beschrieben werden, können diese Eigenschaften bei mehreren oder allen vom Kontrollsystem umfassten Schlitten vorhanden sein. Lediglich zur Vereinfachung der Sprache ist von einem Schlitten (dem Schlitten) die Rede.

Jeder der durch die beschriebenen Eigenschaften eines Schlittens durchführbaren Schritte und jeder andere, im Kontrollsystem durchführbare Schritt kann einzeln oder als Kombination von mehreren so beschriebenen Schritten als Schritt(e) eines oben beschriebenen Verfahrens umfasst sein.

Der Schlitten ist so ausgebildet, dass er einen Behälter, z.B. einen Behälter, der auf dem Transporteur befördert wird, halten kann und Mittel zum Wiegen des gehaltenen Behälters umfasst. Ein Kontrollsystem kann mehr als 5, mehr als 10 oder mehr als 25 solche Schlitten umfassen.

Mit der vom Schlitten umfassten Wägezelle kann das Gewicht des gehaltenen Behälters bestimmt werden.

Eine Wägezelle kann z.B. ein Piezoelement umfassen, um das Gewicht des gefüllten Behälters zu bestimmen.

Eine Wägezelle kann beispielsweise wie in der EP 1 025 424 B2 beschrieben aufgebaut sein.

Durch das Halten des Behälters durch den Schlitten kann eine Führung des Behälters erfolgen, z.B. um eine scharfe Kurve, ohne dass die Zuordenbarkeit der Behälter (Wissen über ursprüngliche Reihenfolge) verloren geht, wie das bei Systemen aus dem Stand der Technik häufig der Fall ist. Dies kann z.B. vorteilhaft sein, da das Kontrollsystem daher so z.B. am Maschinenausgang einer Behälterbehandlungsmaschine (z.B. eines Abfüllers) angeordnet werden kann, und die Behälter am Ausgang der Behälterbehandlungsmaschine greifen kann und dann um eine Kurve führen kann, bevor die Behälter gewogen werden, ohne dass die Zuordnung des Behälters verloren geht. Dies kann beispielsweise eine platzsparende Anordnung oder Ausbildung des Kontrollsystems erlauben.

Ein Verwiegen des gefüllten Behälters, der von einem Schlitten gehalten wird, ist typischerweise vorteilhaft, da insbesondere bei Kunststoffbehältern oder Metallbehältern das Gewicht der einzelnen Behälter typischerweise recht konstant und bekannt ist, z.B. mit Abweichungen von 1 g oder weniger. Dadurch kann die Bestimmung der Füllmenge aus dem Gesamtgewicht mit einer hohen Genauigkeit erfolgen. (Die in Deutschland geltenden Werte von 10 ml auf 1 Liter können so deutlich unterschritten werden, was mit typischen optischen Messverfahren oft nur mit zusätzlichen Korrektureinrichtungen möglich ist.) Zudem ist das Ergebnis der Messung typischerweise unabhängig von Schäumen oder Schwappen der Flüssigkeit. Eine Messung ist typischerweise auch für Behälter möglich, in denen optische Systeme versagen, z.B. im Halsbereich staniolierte oder etikettierte oder undurchsichtige Behälter, also z.B. auch nach dem Etikettiervorgang und/oder einer Etikettiermaschine.

Der Schlitten ist im Kontrollsystem bewegbar und in mindestens einem Bereich entlang des Transporteurs bewegbar, typischerweise (ungefähr) parallel zum Transporteur. Der Schlitten kann beispielsweise entlang einer vorgegebenen Laufbahn bewegt werden, die in mindestens einem Bereich den Transporteur entlang führt. Der Schlitten kann entlang der Laufbahn frei beweglich, einzeln ansteuerbar und exakt positionierbar sein.

Das Kontrollsystem kann so ausgebildet sein, dass laufend eine Positionsbestimmung des Schlittens erfolgen kann. Die Positionsbestimmung kann z.B. durch ein Steuerungssystem erfolgen. Alternativ oder zusätzlich kann eine Positionsbestimmung durch andere Mittel, z.B. Sensoren, oder eine Positionserfassung des Schlittens erfolgten. Die bestimmte Position kann z.B. an ein Steuerungssystem übertragen werden.

In einem Kontrollsystem kann der oder die Schlitten entlang einer Laufbahn bewegbar sein. Die Laufbahn kann eine mechanische Führung, wie z.B. ein Band, eine Metallschiene oder ähnliches, umfassen. In einem Kontrollsystem mit mehreren Schlitten ist die Laufbahn üblicherweise die gleiche für alle Schlitten.

In dem Bereich, in der der Schlitten entlang des Transporteurs bewegbar ist, ist die Laufbahn des Schlittens im Kontrollsystem typischerweise so angeordnet oder anordenbar, dass der Schlitten einen auf dem Transporteur beförderten gefüllten Behälter halten kann. Der Schlitten kann dabei seitlich und/oder oberhalb des Transporteurs entlang geführt werden.

Typischerweise kann der Schlitten so bewegt werden, dass er in einem Bereich, in dem er entlang des Transporteurs bewegt wird, mit der Geschwindigkeit des Transporteurs bewegt werden kann. Dadurch kann ein Behälter von dem Schlitten gegriffen und/oder während dem Transport auf dem Transporteur gehalten werden und/oder auf dem Transporteur los gelassen werden, ohne dass es zu starken Beschleunigungen des Behälters kommt. Während der Haltedauer kann in einem Wägebereich eine Gewichtsmessung durch die Mittel zum Wiegen des gehaltenen Behälters erfolgen.

Im Wägebereich muss das gesamte Gewicht des Behälters durch den Schlitten gehalten werden. Dies geschieht üblicherweise dadurch, dass ein Abstand zwischen dem Transporteur und dem Behälter erzeugt wird. Dies kann beispielsweise dadurch erfolgen, dass im Wägebereich der Transporteur (leicht) abgesenkt und/oder unterbrochen ist und/oder die die Laufbahn des Schlittens (leicht) angehoben ist. Am Beginn und Ende des Wägebereichs ist daher die Bewegungsrichtung des Schlittens entlang dem Transporteur, und zwar typischerweise fast, aber nicht ganz parallel.

Die Absenkung des Transporteurs und/oder Anhebung der Laufbahn des Schlittens kann gering sein, und z.B. zwischen 2 mm und 3 cm, oder zwischen 2 mm und 1 cm gegenüber der normalen Höhe des Transporteurs und/oder der Laufbahn des Schlittens betragen. Dies kann vorteilhaft sein, weil, auch wenn ein Behälter vom Schlitten nicht gehalten wird, z.B. nicht sauber gegriffen wurde, dieser dann in einigen Ausführungsformen den weiteren Ablauf nicht stört, sondern auf dem Transporteur einfach weiterlaufen kann und mit dem Produktionsstrom weitergeführt wird.

Typischerweise ist der Wägebereich groß genug gewählt oder so einstellbar, dass das Gewicht des Behälters mit der für das jeweilige Produkt erforderlichen Genauigkeit in diesem Bereich bestimmt werden kann. Die Länge des Wägebereichs kann dabei vom Zeitraum abhängen, der zum Wiegen des Behälters notwendig ist (z.B. 100 ms oder länger) und von der typischen Geschwindigkeit des Transporteurs. Ein Wägebereich kann z.B. eine Länge von 50 cm oder mehr haben. Je länger der Wägebereich ist, desto genauer kann die Gewichtsbestimmung erfolgen.

Das Kontrollsystem umfasst einen Linearmotor als Antrieb für den Schlitten. Der Antrieb kann einen Magnetantrieb (z.B. MagneMotion) umfassen oder als solcher ausgebildet sein. Jeder Schlitten kann durch den Linearmotor einzeln, also unabhängig von den anderen Schlitten, ansteuerbar sein.

Mit so einem Linearmotor kann das Kontrollsystem so ausgebildet sein, dass die Laufbahn des Schlittens scharfe Kurven und/oder aufwärts und/oder abwärts aus einer horizontalen Ebene herauslaufen kann und/oder knickbar (z.B. elektrisch verstellbar) ist. Dadurch kann eine platzsparende Anordnung des Kontrollsystems erreicht werden und/oder die Höhe des Schlittens anpassbar sein.

Die aktuelle Position des Schlittens kann, z.B. durch Sensoren, erfasst werden.

Ein Schlitten kann den Behälter beispielsweise mittels einer (mechanischen) Klemmvorrichtung halten. Eine (mechanische) Klemmvorrichtung kann z.B. eine Klammer umfassen oder als Klammer ausgebildet sein. Beispielsweise kann das Kontrollsystem so ausgebildet sein, dass eine Klemmvorrichtung am Halsbereich einer Kunststoffflasche oder am Tragring angreifen kann, oder, insbesondere bei zylindrischen Behältern, z.B. im Rumpfbereich angreifen kann. Alternativ oder zusätzlich zu einer Klemmvorrichtung kann beispielsweise eine Saugvorrichtung oder andere Befestigungsmöglichkeit verwendet werden. Das Halten des gefüllten Behälters kann von oben und/oder von der Seite des Behälters erfolgen.

Eine (mechanische) Klemmvorrichtung, eine Saugvorrichtung und/oder andere Befestigungsmöglichkeit kann steuerbar sein, z.B. durch pneumatisch oder elektrisch betriebene Aktoren. In einigen Ausführungsformen kann diese Steuerung an jedem Punkt der Laufbahn des Schlittens erfolgen. Typischerweise ist ein Greifen des Behälters sowie ein Loslassen des Behälters an jedem Punkt der Laufbahn des Schlittens möglich. Ein pneumatisch oder elektrisch betriebener Aktor kann z.B. durch ein Steuerungssystem steuerbar sein. Eine Datenübertragung, z.B. von und zu dem Schlitten (z.B. Ergebnisübertragung, Parameterübertragung, Steuerungsparameter etc.) kann dabei z.B. kabellos, z.B. über WLAN oder Koppelelemente in der Stromversorgung erfolgen. Die Energieversorgung der Aktuatoren auf dem Schlitten, beispielsweise die Stromversorgung, kann drahtlos erfolgen. In einigen Ausführungsformen ist mindestens ein Energiespeicher auf dem Schlitten, beispielsweise bei der Wägezelle, angeordnet, der elektrische Energie für die Versorgung von Aktuator und/oder einem Mikroprozessor und/oder der Wägezelle umfasst. Ein solcher Energiespeicher kann beispielsweise in Form eines Stromspeichers, z.B. einer Batterie oder eines Akkus ausgebildet sein.

In einem Kontrollsystem kann die Laufbahn des Schlittens so angeordnet oder anordenbar sein, dass sich die Laufbahn des oder der Schlitten an einer oder beiden der Grenzen des Bereichs, in dem die Laufbahn entlang dem Transporteur verläuft, dem Transporteur annähert, z.B. durch eine Kurve. Dadurch ändert sich der Abstand des oder der Schlitten von dem Transporteur, so dass ein Schlitten, wenn er die Laufbahn entlang läuft, an den Transporteur, und insbesondere einen auf dem Transporteur beförderten Behälter, heran und/oder nach dem Bereich, in dem die Laufbahn entlang dem Transporteur verläuft, wieder von diesem weggeführt wird. Dies kann insbesondere der Fall sein, wenn der oder die Schlitten in einer Schleife umlaufend angeordnet sind.

Dadurch kann beispielsweise der Schlitten so an den Behälter herangeführt werden, dass dieser in die (mechanische) Klemmvorrichtung, an die Saugvorrichtung und/oder andere Befestigungsmöglichkeit heran geführt wird. Anschließend kann diese geschlossen/betätigt werden und der Behälter gehalten werden, z.B. während er auf dem Transporteur weiter befördert wird. Anschließend kann z.B. die (mechanische) Klemmvorrichtung oder Saugvorrichtung oder andere Befestigungsmöglichkeit geöffnet werden und der Schlitten vom Transporteur weggeführt werden, z.B. wenn der Behälter auf dem Transporteur weiterlaufen soll.

Alternativ kann die (mechanische) Klemmvorrichtung oder Saugvorrichtung oder andere Befestigungsmöglichkeit geöffnet werden, wenn der Behälter sich an einer anderen Stelle befindet, z.B. auf oder bei einer Ausleiteinheit befindet, z.B. wenn sich das Behältergewicht nicht innerhalb der Toleranzgrenzen befindet.

Ein Kontrollsystem kann an eine oder mehr Behältersorten anpassbar sein.

Beispielsweise kann die Höhe der Laufbahn des Schlittens anpassbar sein oder der Schlitten auswechselbar sein. Alternativ oder zusätzlich kann die Höhe des Schlittens über der Transportvorrichtung über ein Einstellen der Höhe des Transporteurs und/oder eine (z.B. elektrische) Einstellung der Höhe des Linearmotors und/oder der Laufbahn, z.B. bei Verwendung eines knickbaren Linearmotors und/oder Laufbahn, einstellbar sein. In einigen Ausführungsformen kann zusätzlich oder alternativ die Griffhöhe der Klemm- oder Saugvorrichtung oder anderen Befestigungsmöglichkeit am Schlitten einstellbar sein. In einem Kontrollsystem kann der Schlitten einzeln entnehmbar und/oder austauschbar sein und/oder Schlitten für verschiedene Behältersorten umfasst sein. Das Sollgewicht eines gefüllten Behälters kann einstellbar sein, sowie die gewünschten Toleranzgrenzen, in denen Abweichungen vom Sollgewicht noch akzeptiert werden. Der Antrieb für den Schlitten kann abhängig vom Gewicht des gehaltenen Behälters regelbar sein.

In einem beschriebenen Kontrollsystem ist es üblicherweise ausreichend zur Parametrisierung, das Gewicht des Behälters samt Deckel, z.B. von Deckel und Preform (also damit das Gewicht des Behälters und Deckels) und das Gewicht der Flüssigkeit sowie die Toleranzgrenzen zu kennen. Die Parametrisierung kann beispielsweise durch Eingabe der gewünschten Parameter in das Steuerungssystem erfolgen. Dadurch kann das Einstellen des Kontrollsystems für eine Behältersorte mit Produkt typischerweise deutlich einfacher erfolgen, als bei bekannten, insbesondere optischen, Messverfahren, in denen typischerweise zur Justage jeder Behältersorte mit Produkt eine Fachkraft vor Ort sein muss, wobei das Produkt produziert werden muss, so dass typischerweise für jedes andere Produkt die Fachkraft neu anreisen muss.

Das Kontrollsystem kann so ausgebildet sein, dass es weitere Signale erhalten und berücksichtigen kann, beispielsweise von einem oder mehr Sensoren, die ebenfalls die Behälter kontrollieren. Diese Sensoren können im Kontrollsystem umfasst sein oder getrennt davon vorhanden sein. Ein Kontrollsystem kann so ausgebildet sein, dass aufgrund solcher Signale beispielsweise ein Ausleiten des Behälters aus dem Transporteur z.B. auf eine optionale Ausleiteinheit erfolgen kann.

Das Kontrollsystem kann insbesondere einen Sensor umfassen, der das Vorhandensein eines Behälters an einer Stelle auf dem Transporteur, z.B. am Anfang des Transporteurs, detektieren kann. Das Kontrollsystem kann alternativ oder zusätzlich Mittel umfassen, die die Geschwindigkeit des Behälters zu bestimmen, z.B. weitere Sensoren oder einen Drehgeber, der die Geschwindigkeit des Transporteurs bestimmen kann.

Das Kontrollsystem kann so ausgebildet sein, dass die Geschwindigkeit jedes Schlittens einstellbar ist, typischerweise unabhängig von der Geschwindigkeit der anderen Schlitten. Die Geschwindigkeit kann z.B. so einstellbar sein, dass der Schlitten passgenau auf einen Behälter zugeführt werden kann (z.B. so, dass der Behälter in eine Klemmvorrichtung hinein läuft), diesen greifen und anschließend halten kann. Der Schlitten kann sich zuvor z.B. in einer Warteposition befunden haben. Beispielsweise kann das Vorhandensein des Behälters durch einen Sensor und seine Geschwindigkeit durch einen weiteren oder den gleichen Sensor oder anderes Mittel, z.B. einen Drehgeber, festgestellt worden sein. So ein Sensor im Kontrollsystem kann insbesondere dafür geeignet sein, jeden einzelnen Behälter zu erfassen.

Typischerweise sind die Schlitten einzeln ansteuerbar, so dass z.B. auf Unregelmäßigkeiten in der Behälterzuführung oder Geschwindigkeitsänderungen Rücksicht genommen werden kann. In einem System mit mehreren Schlitten kann daher der Abstand der Schlitten zueinander veränderlich sein.

Dies kann insbesondere dazu verwendet werden, die Abstände der Behälter zueinander zu verändern. Beispielsweise kann das System so ausgebildet oder steuerbar sein, dass gehaltene Behälter so transportiert werden können, dass auf dem Transporteur losgelassenen Behälter in einem vorher festgelegten Abstand voneinander und/oder mit einer bestimmten Geschwindigkeit losgelassen werden. Beispielsweise kann die Abstandsveränderung und/oder Geschwindigkeitsänderung auf einem Überschub oder über einer Unterbrechung des Transporteurs erfolgen, um Geräuschemission zu reduzieren. Der Transporteur kann vor und nach dem Überschub oder der Unterbrechung verschiedene Geschwindigkeiten haben. Jeder Schlitten kann so steuerbar sein, dass er während des Transports eines Behälters auf Teilen des Transporteurs mit verschiedenen Geschwindigkeiten jeweils etwa die gleiche Geschwindigkeit wie der jeweilige Teil des Transporteurs hat.

Eine Anordnung mit mehreren Schlitten hat den Vorteil, dass der Durchsatz der untersuchten Behälter im Kontrollsystem lediglich von der Anzahl der Schlitten abhängt, und die Behälter typischerweise nicht stark vereinzelt werden müssen. Dadurch werden die Beschleunigungskräfte auf die Behälter gering gehalten. Zudem kann dadurch z.B. auch die Leistungsfähigkeit des Kontrollsystems bei gleichbleibender Größe eingestellt werden.

Das Kontrollsystem kann eine oder mehr Ausleiteinheiten umfassen, also eine oder mehr Möglichkeiten, Behälter von dem Transporteur zu entfernen und auszuleiten und damit aus dem Produktionsstrom zu entnehmen. Beispielsweise kann die Ausleiteinheit einen Ausleittransporteur oder Sammelbehälter, z.B. Container, umfassen. Mit mehreren Ausleiteinheiten kann das Kontrollsystem so ausgebildet sein, dass Behälter z.B. nach verschiedenen Kriterien auf verschiedene Ausleiteinheiten ausgeleitet werden können. Beispielsweise kann eine Ausleitbahn unter einem Winkel zum Transporteur, beispielsweise unter einem 90°-Winkel oder einem spitzen oder stumpfen Winkel angeordnet sein, so dass Behälter über einen Überschub (alternativ ohne Überschub) vom Transporteur auf die Ausleitbahn ausgeleitet werden können. Ein optionaler Überschub kann vom Kontrollsystem umfasst sein. Alternativ können die Behälter frei (z.B. um 180° vom Transporteur verschoben) auf eine Ausleitbahn oder zu einem Sammelbehälter transportiert werden und dort losgelassen werden.

Der Schlitten kann so ausgebildet sein, dass er den gehaltenen Behälter aus dem Transporteur auf eine Ausleiteinheit ausleiten kann.

Das Kontrollsystem kann beispielsweise so ausgebildet oder steuerbar sein, dass das Gewicht des gefüllten Behälters bestimmt wird, und optional, wenn das Gewicht des gefüllten Behälters außerhalb der Toleranzgrenzen für dieses Produkt liegt, der Schlitten den gehaltenen Behälter aus dem Transporteur auf eine Ausleiteinheit ausleitet, wohingegen optional - wenn das Gewicht des Behälters innerhalb der für das Produkt vorgesehenen Toleranzgrenzen liegt - dieser wieder auf den Transporteur losgelassen werden können, ohne dass es zu starken Beschleunigungen des Behälters kommt. Alternativ kann der Behälter z.B. ausgeleitet werden und z.B. auf einer Ausleiteinheit losgelassen werden, z.B. wenn das Ergebnis des Wiegens oder vom Kontrollsystem erhaltene Signale ein Ausleiten des Behälters erforderliche machen.

Diese Steuerung kann z.B. durch ein von dem Kontrollsystem umfasstes Steuerungssystem, z.B. einen Computer, erfolgen. Für die Steuerung kann z.B. das Ergebnis des Verwiegens des gefüllten Behälters an das Steuerungssystem übertragen werden, z.B. über eine kabellose Verbindung. Alternativ kann der Schlitten so ausgebildet oder programmierbar sein, dass er, wenn das Gewicht nicht innerhalb der Toleranzgrenzen liegt, den gefüllten Behälter ausleitet.

Insbesondere kann das Kontrollsystem so ausgebildet sein, dass - wenn die Gewichtsprüfung ergibt, dass Behälter zu wenig gefüllt sind, um stabil zu stehen, also z.B. auf einer als Ausleittransporteur ausgebildeten ersten Ausleiteinheit ausgeleitet werden zu können - diese mitgenommen werden und bei einer zweiten Ausleiteinheit, die z.B. ein Sammelcontainer umfassen kann, losgelassen werden können.

Das Kontrollsystem kann alternativ oder zusätzlich eine Wassertropfabblaseinheit umfassen oder an eine solche anbaubar sein, wie sie z.B. im Stand der Technik vor Deckelkontrollen angebracht sind, z.B. um Wassertropfen von Deckeln abzublasen. Da auf dem Transporteur die Behälter durch die Schlitten gehalten werden, sind die Behälter stabilisiert und werden durch eine Wassertropfabblaseinheit nicht umgeblasen, wie das im Stand der Technik passieren kann, insbesondere wenn Behälter nur teilbefüllt sind. Dadurch kann die Häufigkeit von Störungen durch umgefallene Behälter reduziert werden. Das Kontrollsystem kann optional auch eine Deckelkontrolleinheit umfassen, in der Deckel von Behältern kontrolliert werden können.

Der Schlitten kann in einem Kontrollsystem in einer Schleife umlaufend angeordnet sein, also z.B. eine geschlossene Kurve durchlaufen und/oder eine geschlossene Kurve umfassen. Die Laufbahn des Schlittens kann also eine Schleife, z.B. eine geschlossene Kurve, sein. Dies kann vorteilhaft sein, da dadurch die Rückführung des Schlittens zum Ausgangspunkt für die Aufnahme eines weiteren Behälters leicht erfolgen kann.

Die Laufbahn des Schlittens kann ungefähr in einer horizontalen Ebene verlaufen, wobei es im Wägebereich davon optional eine geringe Abweichung geben kann, z.B. wenn die Laufbahn des Schlittens dort angehoben wird. Alternativ können Teile der Laufbahn in einer horizontalen Ebene und andere Teile in der anderen Ebene verlaufen, z.B. kann die Laufbahn in Teilen nach oben und/oder nach unten verlaufen und/oder knickbar und (z.B. elektrisch) höhenverstellbar sein.

Die Laufbahn des Schlittens kann, z.B. durch eine Laufbahn des Schlittens in Form einer Schleife, so angeordnet oder anordenbar sein, dass sich beim Hin- und/oder Wegführen des Schlittens zum/vom Transporteur der Abstand des Schlittens vom Transporteur ändern kann.

Zusätzlich zu der Wägezelle kann ein Schlitten Mittel zum Drücken des Behälters umfassen, so dass durch eine Squeezefunktion, wie z.B. in DE 197 03 528 A1 beschrieben, die Dichtheit und/oder der Innendruck des Behälters überprüft werden kann. Das Kontrollsystem kann so ausgebildet sein, dass beim Drücken für die Squeezefunktion die für das Drücken aufgewendete Kraft und/oder die Verformung des Behälters erfasst und ausgewertet werden kann. Sollte bei einem solchen Squeezetest eine Leckage und/oder ein abweichender Innendruck vom gewünschten Innendruck festgestellt werden, kann der Behälter z.B. ausgeleitet werden. Dies kann insbesondere vorteilhaft sein, da z.B. eine (mechanische) Klemmvorrichtung zum Halten eines Behälters gleichzeitig zum Durchführen eines Squeeztests geeignet sein kann, also als Mittel zum Drücken des Behälters verwendet werden kann.

Durch die Prüfung des Innendrucks kann durch solche Mittel zum Drücken des Behälters auch die korrekte Funktion einer Stickstoffeinspritzung, insbesondere einer Einspritzung von flüssigem Stickstoff in den Behälter, geprüft werden. Optional kann dabei auch die Temperatur des Behälters berücksichtigt werden. Falls der gefüllte Behälter nicht den gewünschten Innendruck (innerhalb vorgegebener Toleranzgrenzen) aufweist, kann er beispielsweise ausgeleitet werden. Zusätzlich oder alternativ können die Messwerte erfasst werden und an ein anderes System übertragen werden, wo sie z.B. zur Steuerung der Spritzstoffeinspritzung verwendet werden können.

In anderen Ausführungsformen kann das Kontrollsystem weitere Mittel zu Überprüfen des Behälters, z.B. durch ein Messen einer Deformation, z.B. durch Drücken des Behälters, umfassen, deren Ergebnis für die Ausleitentscheidung in Betracht gezogen werden kann. Diese Mittel können z.B. wie in der WO 99/20991 beschrieben ausgebildet sein.

Weitere Aspekte werden im Folgenden anhand der Figuren erklärt. Hierbei zeigt
- Fig. 1a: eine schematische Darstellung einer Seitenansicht eines Teils eines Kontrollsystems;
- Fig. 1b: eine schematische Draufsicht eines Beispiels für ein Kontrollsystems;
- Fig. 2: eine schematische Darstellung eines Beispiels für einen Schlitten und
- Fig. 3: Beispiele für mögliche Haltepositionen.

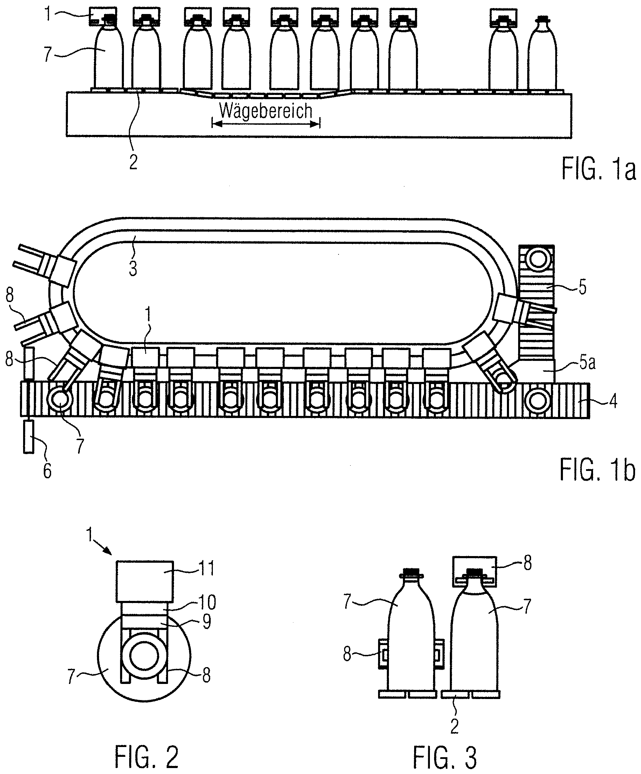

Fig. 1a zeigt eine schematische Seitenansicht eines Teils eines erfindungsgemäßen Kontrollsystems. Hierbei wird jeder gefüllte Behälter 7 durch einen Schlitten 1 auf Transporteur, der in diesem Fall als Transportkette 2 dargestellt ist, gehalten und im eingezeichneten Wägebereich mit dem Schlitten gewogen. In dem gezeigten Beispiel werden die Behälter auf einem Lineartransporteur befördert.

In dem gezeigten Beispiel ist im Wägebereich der Transporteur (leicht) abgesenkt. Ein Absenken des Wägebereichs kann beispielsweise durch die Verwendung von dünneren Verschleißstreifen oder Ähnlichem erfolgen. Dadurch wird in diesem Bereich das gesamte Gewicht des gefüllten Behälters durch den Schlitten gehalten und der gefüllte Behälter kann gewogen werden.

Nach dem Wiegen kann der gefüllte Behälter wieder auf den in dem Beispiel als Transportkette 2 gezeichneten Transporteur zurückgestellt und durch den Transporteur weitergeleitet werden. Dies erfolgt typischerweise beispielsweise, wenn das Gewicht sich innerhalb der gewünschten Toleranzgrenzen liegt.

Diese Anordnung ist vorteilhaft, da, wenn ein Behälter 7 von einem Schlitten nicht korrekt gegriffen wird, trotzdem ein Weiterleiten des Behälters entlang des Transporteurs, in diesem Beispiel Transportkette 2, möglich ist und keine Störung auftritt.

Fig. 1b zeigt eine Draufsicht eines Beispiels für ein Kontrollsystem. Ein solches Kontrollsystem kann beispielsweise einen Bereich wie in Fig. 1a umfassen, muss aber nicht einen Bereich wie in Fig. 1 a umfassen. Beispielsweise kann der Wägebereich und/oder Transporteur anders ausgebildet sein.

In dem gezeigten Beispiel sind die Schlitten in einer Schleife umlaufend angeordnet. In dem gezeigten Beispiel ist die vorgesehene Bewegungsrichtung von links nach rechts. Hierbei werden, wenn das Kontrollsystem läuft, die Schlitten 1 entlang der Laufbahn 3, die in diesem Beispiel schleifenförmig ausgebildet ist, transportiert. Das Kontrollsystem erhält die Information, wann ein neuer Behälter auf dem Transporteur 4 eingeleitet wird. In diesem Beispiel erfolgt diese Information durch eine Meldung von Sensor 6, der erfasst, wann ein Behälter 7 ihn passiert. Das Kontrollsystem kann (muss aber nicht) Sensor 6 umfassen. In dem gezeigten Beispiel ist Sensor 6 beispielhaft am Anfang des Transporteurs 4 angeordnet.

Zusätzlich kann die Transportgeschwindigkeit des Transporteurs 4 berücksichtigt werden und der Verlauf des Behälters vorhergesagt werden. Die Schlitten können in einem erfindungsgemäßen Kontrollsystem beispielsweise Geschwindigkeiten zwischen 0 und 4m/s (oder mehr) erreichen. Typischer Beschleunigungswerte für Schlitten, die in einem erfindungsgemäßen Kontrollsystem umfasst sein können, können bei bis zu 50 m/s² oder mehr liegen.

Typischerweise wird dann ein Schlitten 1 so gesteuert, dass er den Behälter 7 aufnimmt, entlang des Transporteurs 4 führt, dabei das Gewicht des gefüllten Behälters misst, beispielsweise in einem Wägebereich, in dem der Transporteur abgesenkt ist und/oder die Laufbahn des Schlittens angehoben ist.

Der Schlitten 1 kann sich davor in einer Warteposition befunden haben. Die Laufbahn des Schlittens kann, wie in diesem Beispiel gezeigt, so angeordnet (oder anordenbar) sein, dass sie im Bereich bevor sie entlang dem Transporteur läuft, durch eine Kurve auf den Transporteur zuläuft. Dadurch kann der Schlitten sich dem Transporteur annähern und den Behälter 1 passgenau in die hier beispielhaft als Klammer 8 ausgebildete (mechanische) Klemmvorrichtung laufen lassen.

In anderen Ausführungsformen kann, statt oder zusätzlich zu einer Klemmvorrichtung, eine Saugvorrichtung oder andere Befestigungsmöglichkeit verwendet werden (nicht gezeigt).

Nach dem Wägebereich wird der Behälter 7 auf den Transporteur 4 zurückgestellt und die (mechanische) Klemmvorrichtung kann geöffnet werden. Der Behälter kann dann ungehindert auslaufen. Dies passiert typischerweise, wenn alle Messungen ergeben, dass der gefüllte Behälter die erforderlichen Qualitätskriterien, also beispielsweise das Gewicht innerhalb der Toleranzgrenzen, erfüllt. In dem gezeigten Beispiel ist der Transporteur einteilig und linear verlaufend ausgebildet. In anderen Ausführungsformen kann er jedoch zusätzlich einen Überschub umfassen und/oder zweiteilig und/oder unterbrochen ausgeführt sein (nicht gezeigt).

In dem gezeigten Beispiel verläuft die Laufbahn des Schlittens in Laufrichtung nach dem Wägebereich in einer Kurve weg vom Transporteur 4, was ein Auslaufen des Behälters aus der beispielhaft gezeigten Klemmvorrichtung erleichtert. In anderen Ausführungsformen kann die Laufbahn des Schlittens anders verlaufen.

Falls die erforderlichen Qualitätskriterien nicht erfüllt sind, wird der Behälter typischerweise vom Schlitten nicht auf dem Transporteur losgelassen, also in dem gezeigten Beispiel die Klemmvorrichtung nicht geöffnet, sondern durch die Zwangsführung durch den Schlitten auf eine optionale Ausleiteinheit 5 ausgeleitet und die Klemmvorrichtung erst dort geöffnet.

Dann kann der Schlitten von der Ausleiteinheit wegbewegt werden, z.B. durch eine Kurve in seiner Laufbahn, wie in dem gezeigten Beispiel, so dass der Behälter ungestört auf der Ausleiteinrichtung auslaufen kann.

In dem gezeigten Beispiel ist die Ausleiteinheit 5 als Ausleitbahn eingezeichnet, die beispielsweise eine Transportkette umfassen kann.

Eine Beförderung erfolgt in diesem Bespiel beispielhaft über einen optionalen Überschub 5a auf die Ausleitbahn. In anderen Ausführungsformen kann ein Kontrollsystem auch ohne einen Überschub ausgebildet sein und/oder mehr als eine Ausleiteinheit umfassen.

Fig. 2 zeigt einen beispielhaften Schlitten 1, der einen Behälter 7 halten kann.

In dem gezeigten Beispiel umfasst ein Schlitten eine Klemmvorrichtung, beispielhaft als Klammer 8 gezeigt, für Behälter 7. So eine Klemmvorrichtung kann pneumatisch, elektrisch oder anders steuerbar sein, insbesondere eine so steuerbare Klammer umfassen. Eine Steuermöglichkeit für die Klemmvorrichtung in Form eines Aktors 9 ist beispielhaft in Figur 2 schematisch gezeigt. So ein Aktor kann elektrisch, pneumatisch oder anders betrieben werden.

In anderen Ausführungsformen kann statt oder zusätzlich zu einer Klemmvorrichtung der Behälter mittels einer Saugvorrichtung z.B. durch Erzeugen eines Vakuums oder anderes Ansaugens oder in anderer Weise durch eine Befestigungsmöglichkeit gehalten werden.

Ein Schlitten 1 umfasst eine Wägezelle 10 und umfasst typischerweise auch eine mechanische Führung 11, mit der der Schlitten entlang einer Laufbahn entlang dem Linearmotor geführt werden kann.

Wie in Fig. 3 gezeigt, kann ein Schlitten mit seiner Klemmvorrichtung, z.B. Klammer 8, an verschiedenen Behälterpositionen von Behältern auf einem Transportband 2 angreifen.

Insbesondere kann er beispielsweise, was insbesondere bei zylindrischen Behältern bevorzugt ist, am Rumpf angreifen, wie im linken Behälter 7 von Fig. 3 gezeigt oder, insbesondere beispielsweise bei Kunststoffflaschen, im Bereich des Behälterkopfes oder des Tragrings von Behälter 7.

Statt oder zusätzlich zu einer Klemmvorrichtung kann auch eine Saugvorrichtung und/oder eine andere Befestigungsmöglichkeit verwendet werden, die ebenfalls an verschiedenen Stellen eines Behälters, z.B. am Rumpf, im Bereich des Behälterkopfes und/oder des Tragring eines Behälters, angreifen können.

## Patentansprüche

1. Verfahren zum Kontrollieren von einem gefüllten Behälter (7), insbesondere einem gefüllten Getränkebehälter, der auf einem Transporteur (4) befördert wird, mit folgenden Schritten:
der Behälter (7) wird mit einem Schlitten (1) aufgenommen, ein Abstand zwischen dem Behälter (7) und dem Transporteur (4) wird erzeugt, so dass das gesamte Gewicht des Behälters in einem Wägebereich von dem Schlitten gehalten wird,
der gehaltene Behälter (7) wird, **gekennzeichnet durch** die Schritte:
mit einer vom Schlitten (1) umfassten Wägezelle in dem Wägebereich gewogen,
wobei der Schlitten (1) in dem Verfahren mit einem Linearmotor angetrieben wird und somit in mindestens einem Bereich entlang des Transporteurs (4) bewegbar ist.

2. Verfahren nach Anspruch 1, das den Schritt umfasst, dass nach dem Wiegen der gehaltene Behälter (7) vom Transporteur (4) mit dem Schlitten (1) auf eine Ausleiteinrichtung (5) ausgeleitet wird oder der gehaltene Behälter an den Transporteur (4) angenähert wird und auf dem Transporteur (4) losgelassen wird.

3. Verfahren nach Anspruch 1 oder 2, das umfasst, mehrere Behälter zu kontrollieren, wobei optional der Abstand der Schlitten zueinander verändert wird.

4. Kontrollsystem für gefüllte Behälter (7), insbesondere gefüllte Getränkebehälter, zur Durchführung eines Verfahrens nach einem der Ansprüche 1 bis 3, wobei das Kontrollsystem mehrere Schlitten (1) und einen Transporteur (4) umfasst, **dadurch gekennzeichnet, dass** jeder Schlitten (1) so ausgebildet ist, dass er einen Behälter (7) halten kann und eine Wägezelle (10) zum Wiegen des gehaltenen Behälters (7) umfasst und wobei im Wägebereich der Transporteur (4) abgesenkt und/oder unterbrochen ist, so dass das gesamte Gewicht des Behälters in einem Wägebereich von dem Schlitten gehalten wird, und dass das Kontrollsystem einen Linearmotor als Antrieb für die Schlitten umfasst, so dass die Schlitten (1) in mindestens einem Bereich entlang des Transporteurs (4) bewegbar sind.

5. Kontrollsystem für gefüllte Behälter (7), insbesondere gefüllte Getränkebehälter, zur Durchführung eines Verfahrens nach einem der Ansprüche 1 bis 3, wobei das Kontrollsystem mehrere Schlitten (1) und einen Transporteur (4) umfasst, **dadurch gekennzeichnet, dass** jeder Schlitten (1) so ausgebildet ist, dass er einen Behälter (7) halten kann und eine Wägezelle (10) zum Wiegen des gehaltenen Behälters (7) umfasst und wobei im Wägebereich die Laufbahn (3) des Schlittens (1) angehoben ist, so dass ein Abstand zwischen dem Behälter (7) und dem Transporteur (4) erzeugt wird und das gesamte Gewicht des Behälters in einem Wägebereich von dem Schlitten gehalten wird, und dass das Kontrollsystem einen Linearmotor als Antrieb für die Schlitten umfasst, so dass die Schlitten (1) in mindestens einem Bereich entlang des Transporteurs (4) bewegbar sind.

6. Kontrollsystem nach Anspruch 4 oder 5, wobei die Schlitten (1) einen Behälter (7) mit einer mechanischen Klemmvorrichtung, z.B. einer Klammer (8), halten können.

7. Kontrollsystem nach einem der Ansprüche 4 bis 6, wobei die Klemmvorrichtung steuerbar ist.

8. Kontrollsystem nach einem der Ansprüche 4 bis 7, wobei das Kontrollsystem an eine oder mehr Behältersorten anpassbar ist.

9. Kontrollsystem nach einem der Ansprüche 4 bis 8, wobei das Kontrollsystem einen Sensor (6) umfasst, der das Vorhandensein eines Behälters an einer Stelle auf dem Transporteur erfasst.

10. Kontrollsystem nach einem der Ansprüche 4 bis 9, wobei die Geschwindigkeit der Schlitten einstellbar ist.

11. Kontrollsystem nach einem der Ansprüche 4 bis 10, wobei die Schlitten in einer Schleife umlaufend angeordnet sind.

12. Kontrollsystem nach einem der Ansprüche 4 bis 11, wobei jeder Schlitten (1) einzeln ansteuerbar ist.

13. Kontrollsystem nach einem der Ansprüche 4 bis 12, wobei das Kontrollsystem eine Ausleiteinheit (5) umfasst und die Schlitten so ausgebildet sind, dass sie den gehaltenen Behälter (7) aus dem Transporteur (4) auf die Ausleiteinheit (5) ausleiten können und/oder wobei das Kontrollsystem eine Wassertropfabblaseinheit umfasst.

14. Kontrollsystem nach einem der Ansprüche 4 bis 13, wobei die Schlitten Mittel zum Drücken des Behälters umfasst.

## Claims

1. A method for monitoring a filled container (7), in particular a filled beverage container, which is conveyed on a conveyor (4), comprising the following steps:
taking up the container (7) by a carriage (1),
creating a spacing between the container (7) and the conveyor (4), so that the entire weight of the container is retained by the carriage in a weighing region,
**characterized by** the steps: weighing the retained container (7) in the weighing region using a load cell comprised by the carriage (1),
the carriage (1) being driven by a linear motor according to said method and thus being movable in at least one area along the conveyor (4).

2. The method according to claim 1, comprising the step of discharging, after weighing, the retained container (7) by the carriage (1) from the conveyor (4) onto a discharge unit (5), or moving the retained container to a position close to the conveyor (4) and releasing it on the conveyor (4).

3. The method according to claim 1 or 2, comprising the step of monitoring a plurality of containers, the spacing between the individual carriages being optionally changed.

4. A monitoring system for filled containers (7), in particular filled beverage containers, for executing a method according to one of the claims 1 to 3, wherein the monitoring system comprises a plurality of carriages (1) and a conveyor (4), **characterized in that** each carriage (1) is configured such that it is capable of retaining a container (7) and comprises a load cell (10) for weighing the retained container (7), and wherein the conveyor (4) is lowered and/or interrupted in the weighing region, so that the entire weight of the container is retained by the carriage in a weighing region, and that the monitoring system comprises a linear motor as a drive for the carriages, so that the carriages (1) are movable in at least one area along the conveyor (4).

5. A monitoring system for filled containers (7), in particular filled beverage containers, for executing a method according to one of the claims 1 to 3, wherein the monitoring system comprises a plurality of carriages (1) and a conveyor (4), **characterized in that** each carriage (1) is configured such that it is capable of retaining a container (7) and comprises a load cell (10) for weighing the retained container (7), and wherein the track (3) of the carriage (1) is raised in the weighing region, so that a spacing between the container (7) and the conveyor (4) is generated and the entire weight of the container is retained by the carriage in a weighing region, and that the monitoring system comprises a linear motor as a drive for the carriages, so that the carriages (1) are movable in at least one area along the conveyor (4).

6. The monitoring system according to claim 4 or 5, wherein the carriages (1) are capable of retaining a container (7) by means of a mechanical clamping device, e.g. a clamp (8).

7. The monitoring system according to one of the claims 4 to 6, wherein the clamping device is controllable.

8. The monitoring system according to one of the claims 4 to 7, wherein the monitoring system is adaptable to one or more container types.

9. The monitoring system according to one of the claims 4 to 8, wherein the monitoring system comprises a sensor (6), which detects the presence of a container at a position on the conveyor.

10. The monitoring system according to one of the claims 4 to 9, wherein the speed of the carriages is adjustable.

11. The monitoring system according to one of the claims 4 to 10, wherein the carriages are arranged to circulate in a loop.

12. The monitoring system according to one of the claims 4 to 11, wherein each carriage (1) is controllable individually.

13. The monitoring system according to one of the claims 1 to 12, wherein the monitoring system comprises a discharge unit (5) and the carriages are configured such that they are capable of discharging the retained container (7) from the conveyor (4) onto the discharge unit (5) and/or wherein the monitoring system comprises a waterdrop blowoff unit.

14. The monitoring system according to one of the claims 4 to 13, wherein the carriages comprise means for applying pressure to the container.

## Revendications

1. Procédé de contrôle d'un récipient (7) rempli, en particulier d'un récipient pour boisson rempli, convoyé sur un transporteur (4), comprenant les étapes ci-dessous :
le récipient (7) est réceptionné par un chariot (1),
un espacement est créé entre le récipient (7) et le transporteur (4), de sorte que, dans une zone de pesée, le poids total du récipient est supporté par le chariot,
le récipient (7) porté est, de manière **caractérisée par** lesdites étapes, pesé dans la zone de pesée grâce à une cellule de pesée intégrée dans le chariot (1),
dans lequel, selon ledit procédé, le chariot (1) est entraîné par un moteur linéaire et peut ainsi être déplacé dans au moins une zone le long du transporteur (4).

2. Procédé selon la revendication 1, comprenant l'étape dans laquelle, après la pesée, le récipient (7) porté est évacué avec le chariot (1) depuis le transporteur (4) vers un dispositif d'évacuation (5), ou le récipient porté est rapproché du transporteur (4) et est libéré sur le transporteur (4).

3. Procédé selon la revendication 1 ou 2, comprenant le contrôle de plusieurs récipients, dans lequel l'espacement entre les chariots est éventuellement modifié.

4. Système de contrôle pour des récipients (7) remplis, en particulier des récipients pour boisson remplis, permettant la mise en œuvre d'un procédé selon l'une quelconque des revendications 1 à 3, dans lequel le système de contrôle comprend plusieurs chariots (1) et un transporteur (4), **caractérisé en ce que** chaque chariot (1) est conçu pour porter un récipient (7) et comprend une cellule de pesée (10) permettant de peser le récipient (7) porté, et dans lequel le transporteur (4) est abaissé et/ou arrêté dans la zone de pesée, de sorte que le poids total du récipient est supporté par le chariot dans une zone de pesée, et le système de contrôle comprend un moteur linéaire faisant office d'entraînement pour les chariots, de sorte que les chariots (1) peuvent être déplacés le long du transporteur (4) dans au moins une zone.

5. Système de contrôle pour des récipients (7) remplis, en particulier des récipients pour boisson remplis, permettant la mise en œuvre d'un procédé selon l'une quelconque des revendications 1 à 3,
dans lequel le système de contrôle comprend plusieurs chariots (1) et un transporteur (4), **caractérisé en ce que**
chaque chariot (1) est conçu pour porter un récipient (7) et comprend une cellule de pesée (10) permettant de peser le récipient (7) porté et dans lequel le chemin de roulement (3) du chariot (1) est soulevé dans la zone de pesée, de sorte qu'un espacement est créé entre le récipient (7) et le transporteur (4) et le poids total du récipient est supporté par le chariot dans la zone de pesée, et le système de contrôle comprend un moteur linéaire faisant office d'entraînement pour les chariots, de sorte que les chariots (1) peuvent être déplacés le long du transporteur (4) dans au moins une zone.

6. Système de contrôle selon la revendication 4 ou 5, dans lequel les chariots (1) peuvent porter un récipient (7) grâce à un dispositif de serrage mécanique, par exemple une pince (8).

7. Système de contrôle selon l'une quelconque des revendications 4 à 6, dans lequel le dispositif de serrage peut être commandé.

8. Système de contrôle selon l'une quelconque des revendications 4 à 7, dans lequel le système de contrôle peut être adapté à un ou plusieurs type(s) de récipient.

9. Système de contrôle selon l'une quelconque des revendications 4 à 8, dans lequel le système de contrôle comprend un capteur (6) qui détecte la présence d'un récipient au niveau d'un emplacement sur le transporteur.

10. Système de contrôle selon l'une quelconque des revendications 4 à 9, dans lequel la vitesse des chariots peut être ajustée.

11. Système de contrôle selon l'une quelconque des revendications 4 à 10, dans lequel les chariots sont agencés de manière à parcourir une boucle.

12. Système de contrôle selon l'une quelconque des revendications 4 à 11, dans lequel chaque chariot (1) peut être commandé de manière individuelle.

13. Système de contrôle selon l'une quelconque des revendications 4 à 12, dans lequel le système de contrôle comprend une unité d'évacuation (5) et les chariots sont conçus pour pouvoir évacuer le récipient (7) porté depuis le transporteur (4) vers l'unité d'évacuation (5) et/ou dans lequel le système de contrôle comprend une unité d'égouttage par soufflage.

14. Système de contrôle selon l'une quelconque des revendications 4 à 13, dans lequel le chariot comprend un moyen permettant de pousser le récipient.
